# EUROPEAN PATENT SPECIFICATION

(11) **EP 4 152 503 B1**
(45) Date of publication and mention of the grant of the patent: **02.07.2025**
(21) Application number: 22736900.6
(22) Date of filing: 07.01.2022
(51) Int. Cl.: H01M 50/204, H01M 50/383, H01M 50/271, H01M 50/24, A62C 3/16, A62C 3/07, A62C 35/10

(54) **BATTERY PACK AND VEHICLE COMPRISING SAME**
BATTERIEPACK UND FAHRZEUG DAMIT
BLOC-BATTERIE ET VÉHICULE LE COMPRENANT

(30) Priority: 08.01.2021 KR 20210002876
(43) Date of publication of application: 22.03.2023
(73) Proprietor: LG Energy Solution, Ltd., Seoul 07335 (KR)
(72) Inventor: LEE, Shang-Kyu, Daejeon 34122 (KR); KIM, Ji-Yong, Daejeon 34122 (KR)
(74) Representative: Plasseraud IP
(86) International application number: PCT/KR2022/000337
(87) International publication number: WO 2022/149923

(56) References cited:
- EP-A1- 3 107 145
- JP-A- H07 272 751
- JP-B2- 6 631 726
- KR-A- 20180 113 809
- KR-A- 20200 104 005
- KR-A- 20200 104 005
- KR-B1- 102 123 684
- US-A1- 2019 359 070

## Description

### TECHNICAL FIELD

The present application claims priority to Korean Patent Application No. 10-2021-0002876 filed on January 8, 2021 in the Republic of Korea.

The present disclosure relates to a battery pack and a vehicle including the same, and more specifically, to a battery pack with fire extinguishing function and a vehicle including the same.

### BACKGROUND ART

As technology development and demand for mobile devices increase, the demand for secondary batteries as an energy source is rapidly increasing. In the related art, nickel cadmium batteries or hydrogen ion batteries have been used as secondary batteries, but recently, lithium secondary batteries in which they have almost no memory effect compared to nickel-based secondary batteries, resulting in free charge/discharge, very low self-discharge rate, and high energy density, have been widely used.

Such a lithium secondary battery mainly uses a lithium-based oxide and a carbon material as a positive electrode active material and a negative electrode active material, respectively. The lithium secondary battery includes an electrode assembly in which a positive electrode plate and a negative electrode plate coated with the positive electrode active material and the negative electrode active material, respectively are disposed with a separator interposed therebetween, and a casing, that is, a battery case, for sealing and accommodating the electrode assembly along with an electrolyte.

The lithium secondary battery includes a positive electrode, a negative electrode, a separator interposed therebetween, and an electrolyte, and is classified into a lithium-ion battery (LIB), a polymer lithium-ion battery (PLIB), and the like depending on which positive electrode and negative electrode active material to be used. In general, the electrodes of these lithium secondary batteries may be formed by coating a positive electrode or negative electrode active material on a current collector such as an aluminum or copper sheet, mesh, film, foil, or the like, followed by drying.

Recently, the supply of electric vehicles using secondary batteries has been spreading for eco-friendly purposes, and mandatory standards for thermal diffusion due to thermal runaway of secondary batteries have been published in countries such as China.

In this respect, the lithium secondary battery is currently in the spotlight due to its advantages such as high operating voltage and remarkably high energy density. However, the lithium secondary battery uses an organic electrolyte, so that when the lithium secondary battery is overcharged, overcurrent and overheating may occur, thereby causing a problem of a fire due to explosion or ignition in severe cases.

US2019/359070 A1, KR2020 0104005 A and EP3107145 A1 each relate to battery modules having internal fire extinguishing means.

### DISCLOSURE

### Technical Problem

The present disclosure is designed to solve the problems of the related art, and therefore the present disclosure is directed to providing a battery pack capable of delaying propagation of flame or preventing thermal diffusion by extinguishing fire when a flame occurs in the battery pack, and a vehicle including the same.

### Technical Solution

In one aspect of the present disclosure, there is provided a battery pack according to claim 1.

And, the fire extinguishing material may include Novec.

And, the stopper may include a first portion extending upwardly from an end of the lower plate; a second portion extending vertically from the first portion; and a third portion extending vertically from the second portion, wherein the third portion may be provided to be caught by the fixing portion.

Meanwhile, in another aspect of the present disclosure, there is provided a vehicle including the battery pack.

### Advantageous Effects

According to embodiments of the present disclosure, there is an effect of delaying propagation of flame or preventing thermal diffusion by extinguishing fire when a flame occurs in the battery pack, in virtue of the fire extinguishing material provided in the upper cover of the case to be allowed to fall in a flame.

### DESCRIPTION OF DRAWINGS

FIG. 1 is an exploded perspective view schematically showing a battery pack according to the first embodiment of the present disclosure.
FIG. 2 is a cross-sectional view schematically showing an upper cover in a battery pack according to the first embodiment of the present disclosure.
FIG. 3 is a cross-sectional view schematically showing an upper cover in a battery pack according to the second embodiment of the present disclosure.
FIG. 4 is a perspective view schematically showing a deformation layer in which a fixing portion is formed in a battery pack according to the second embodiment of the present disclosure.
FIG. 5 is a perspective view schematically showing a lower plate in which a stopper is formed in a battery pack according to the second embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. When it is determined that a detailed description of a related known function or configuration may unnecessarily obscure the gist of the present disclosure, such description will be omitted.

As used herein, the term 'coupled' or 'connected' refers to not only a case in which one member and another member are directly coupled or directly connected, but also a case in which one member is indirectly coupled or indirectly connected to another member through a joint member.

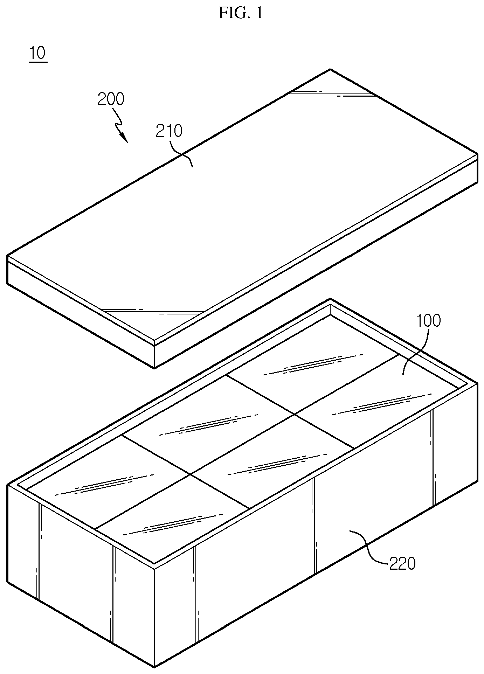

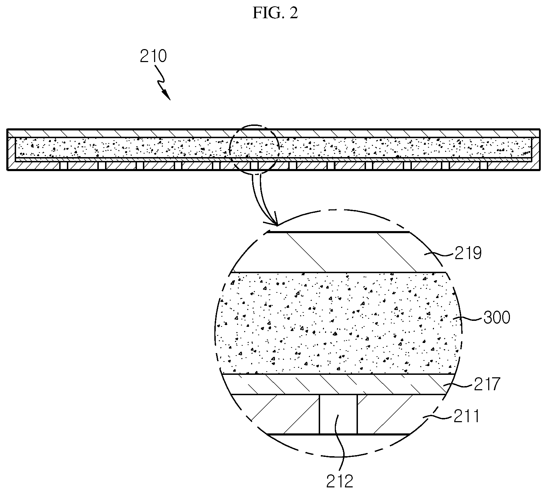

FIG. 1 is an exploded perspective view schematically showing a battery pack according to the first embodiment of the present disclosure, and FIG. 2 is a cross-sectional view schematically showing an upper cover in a battery pack according to the first embodiment of the present disclosure.

Referring to FIGS. 1 and 2, a battery pack 10 according to an embodiment of the present disclosure includes a battery module 100, a case 200, and a fire extinguishing material 300.

The battery module 100 includes a plurality of battery cells (not shown). The battery cell may be provided in various types, for example, in a cylindrical type, a prismatic type, or a pouch type. Hereinafter, for convenience of description, a case where the battery cell is in a pouch type will be mainly described.

The plurality of battery cells may be stacked on each other in various forms. For example, a battery cell is accommodated in a cartridge assembly (not shown), and a plurality of cartridge assemblies may be stacked on each other. However, the stacking method of the plurality of battery cells is not limited thereto and may vary.

In addition, the cartridge assembly accommodating the battery cell may be manufactured by injection molding of plastic. A connector element or a terminal element may be provided in the cartridge assembly. The connector element may include, for example, various types of electrical connection parts or connection members to be connected to a battery management system (BMS, not shown) capable of providing data on voltage or temperature of the battery cell.

In addition, the terminal element, as a main terminal connected to the battery cell, includes a positive electrode terminal and a negative electrode terminal, and a terminal bolt is provided in the terminal element to be electrically connected to the outside. Meanwhile, the battery cell may have a variety of shapes.

The battery cell includes an electrode lead (not shown), and the electrode lead provided in the battery cell is a kind of terminal exposed to the outside and connected to an external device, and may be made of a conductive material.

The electrode lead may include a positive electrode lead and a negative electrode lead. The positive electrode lead and the negative electrode lead may be disposed in opposite directions with respect to the longitudinal direction of the battery cell, or the positive electrode lead and the negative electrode lead may be disposed in the same direction with respect to the longitudinal direction of the battery cell.

The positive electrode lead and the negative electrode lead may be made of various materials. For example, the positive electrode lead may be made of an aluminum material, and the negative electrode lead may be made of a copper material.

The electrode lead may be electrically coupled to a bus bar (not shown). The battery cell may have a structure in which a plurality of unit cells arranged in the order of positive electrode plate-separator-negative electrode plate or a plurality of bi-cells arranged in the order of positive electrode plate-separator-negative electrode plate-separator-positive electrode plate-separator-negative electrode plate are stacked according to the battery capacity.

The battery module 100 is accommodated in the case 200. The case 200 may be provided in various ways. For example, referring to FIG. 1, the case 200 may include a lower cover 220 into which the battery module 100 is inserted, and an upper cover 210 which is coupled to the lower cover 220 to close the battery module 100.

The upper cover 210 includes a lower plate 211, a deformation layer 217, and an upper plate 219.

Referring to FIG. 2, the lower plate 211 is provided as a plate having various shapes, and at least one hole 212 is formed in the lower plate 211. Then, when a flame is generated and the deformation layer 217 to be described later melts, the fire extinguishing material 300 falls through the hole 212 of the lower plate 211.

The lower plate 211 may be made of various materials, for example, a metal material such as steel to maintain the shape of the hole 212 even in a flame. However, the material of the lower plate 211 is not limited thereto.

The deformation layer 217 is positioned on an upper side of the lower plate 211 and is provided to be deformed by flame. Deformation by flame may vary, for example, the shape may be deformed by melting by flame.

In addition, the deformation layer 217 is made of vinyl or plastic, which is a material that melts by flame. Hereinafter, for convenience of description, a case where the deformation layer 217 is vinyl will be mainly described.

When a flame starts in the battery module 100 inside the battery pack 10, the flame melts the deformation layer 217 made of vinyl through the hole 212 of the lower plate 211. Then, when a flame is generated and the deformation layer 217 is all melted, the hole 212 of the lower plate 211 blocked by the deformation layer 217 is completely opened, and thus the fire extinguishing material 300 located on the deformation layer 217 falls through the hole 212 of the lower plate 211 to remove the flame.

The upper plate 219 is coupled to the lower plate 211 to cover the fire extinguishing material 300. That is, the fire extinguishing material 300 is disposed in a closed space between the upper plate 219 and the lower plate 211. Here, since the deformation layer 217 made of vinyl is located on the upper side of the lower plate 211, the fire extinguishing material 300 is disposed on the deformation layer 217 made of vinyl.

The fire extinguishing material 300 is provided in the upper cover 210 of the case 200. For example, the fire extinguishing material 300 is disposed in a closed space between the upper plate 219 and the lower plate 211 of the upper cover 210, and when a flame occurs in the battery cell or the battery module 100 inside the battery pack 10, the fire extinguishing material 300 drops to the point where the flame occurs to remove the flame.

Here, the fire extinguishing material 300 includes a fire extinguishing liquid or fire extinguishing powder. That is, the fire extinguishing material 300 may be either liquid or powder as long as it is capable of extinguishing fire. For example, the fire extinguishing material 300 may be configured to include Novec. However, the fire extinguishing material 300 is not limited thereto, and various liquid or powder-type materials may be included as long as fire extinguishing function is possible.

Hereinafter, the operation and effect of the battery pack 10 according to the present disclosure will be described with reference to the drawings.

The case 200 of the battery pack 10 includes the upper cover 210, wherein the upper cover 210 includes the lower plate 211, the deformation layer 217, and the upper plate 219. The hole 212 is formed in the lower plate 211. Also, the deformation layer 217 is made of vinyl or the like to be deformed by flame and is placed on the lower plate 211, and the upper plate 219 is coupled to the lower plate 211 to form a closed space.

The fire extinguishing material 300 includes a fire extinguishing liquid or fire extinguishing powder, and is located on the deformation layer 217 in a closed space between the upper plate 219 and the lower plate 211.

In addition, when a fire starts inside the battery pack 10 and flame is generated, the vinyl that is the deformation layer 217 is melted by the heat of the flame, thereby completely opening the hole 212 of the lower plate 211 blocked by the deformation layer 217.

At this time, the fire extinguishing material 300 is dropped by gravity to the point where there is a flame through the hole 212 of the lower plate 211 to perform the function of fire extinguishing.

Accordingly, there is an effect of delaying propagation of flame or preventing thermal diffusion by extinguishing fire when a flame occurs in the battery pack 10.

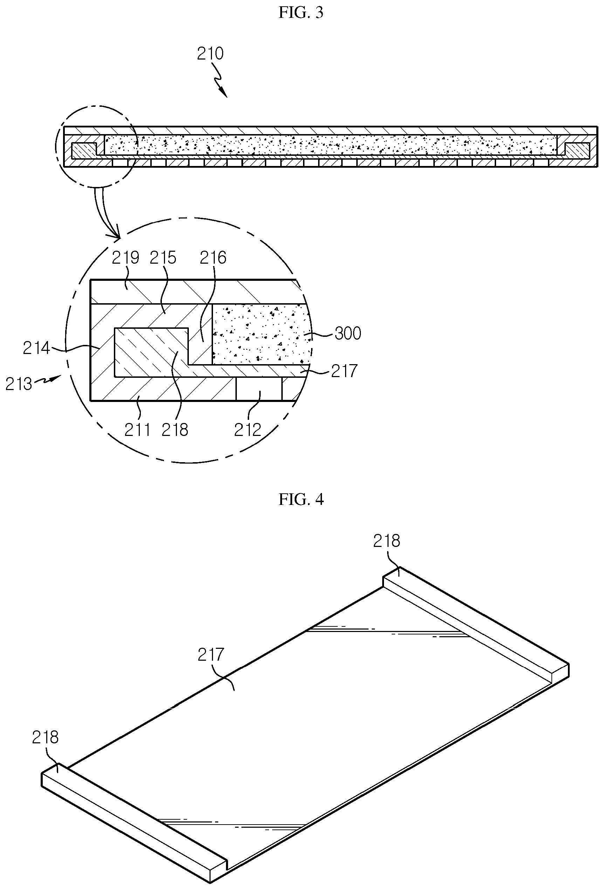

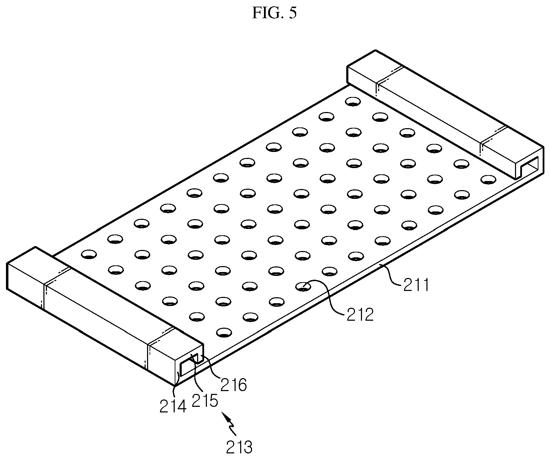

FIG. 3 is a cross-sectional view schematically showing the upper cover 210 in the battery pack 10 according to the invention of the present disclosure, and FIG. 4 is a perspective view schematically showing the deformation layer 217 in which the fixing portion 218 is formed in the battery pack 10 according to the invention of the present disclosure. Also, FIG. 5 is a perspective view schematically showing the lower plate 211 in which the stopper 213 is formed in the battery pack 10 according to the invention of the present disclosure.

Hereinafter, the operation and effect of the battery pack 10 according to the invention of the present disclosure will be described with reference to the drawings. However, descriptions common to those described in the battery pack 10 according to the present disclosure will be replaced with the above-mentioned descriptions.

Referring to FIGS. 3 to 5, the fixing portion 218 is formed in the deformation layer 217 and the stopper 213 is formed in the lower plate 211.

If the size of the hole 212 formed in the lower plate 211 is small, the deformation layer 217 does not descend through the hole 212 of the lower plate 211 in spite of the fact that the deformation layer 217 made of vinyl is placed on the lower plate 211 and the fire extinguishing liquid or fire extinguishing powder is placed on the deformation layer 217.

However, if the size of the hole 212 formed in the lower plate 211 is larger than that in a predetermined range, a portion of the deformation layer 217 descends to the hole 212 formed in the lower plate 211 due to the weight of the fire extinguishing liquid or fire extinguishing powder placed on the deformation layer 217.

In order to prevent this, a structure capable of pulling the deformation layer 217 from both sides of the deformation layer 217 is required. To this end, in the invention, the fixing portion 218 is formed in the deformation layer 217, and the stopper 213 is formed in the lower plate 211.

Referring to FIGS. 3 and 4, the fixing portions 218 are formed at both ends of the deformation layer 217. Here, the fixing portion 218 may be made of the same material as the deformation layer 217 or may be made of a different material. For example, when the deformation layer 217 is made of vinyl, the fixing portion 218 is made of plastic and may be fixedly coupled to the vinyl.

In addition, the fixing portion 218 is provided to have a thickness greater than that of the deformation layer 217 and is formed to protrude upwardly higher than the deformation layer 217. That is, the thickness of the fixing portion 218 in the height direction is thicker than the thickness of the deformation layer 217 in the height direction.

Referring to FIGS. 3 and 5, the stopper 213 is formed in the lower plate 211.

The stoppers 213 are formed at both ends of the lower plate 211 and are in contact with the fixing portion 218 as shown in FIG. 3. That is, at least a portion of the stopper 213 is provided to be caught by the fixing portion 218.

For example, the stopper 213 may be configured to include a first portion 214, a second portion 215, and a third portion 216.

The first portion 214 extends upwardly from the end of the lower plate 211. Also, the second portion 215 extends from the first portion 214 at a predetermined angle, for example, vertically. And, the third portion 216 extends from the second portion 215 at a predetermined angle, for example, vertically.

Here, referring to FIG. 5, a predetermined space in which the third portion 216 side is opened by the first portion 214, the second portion 215, and the third portion 216 of the stopper 213 is formed, and referring to FIG. 3, the fixing portions 218 formed at both ends of the deformation layer 217 are configured to be inserted into the space.

Accordingly, the third portion 216 is caught by the fixing portion 218, and even if the fire extinguishing liquid or fire extinguishing powder is placed on the deformation layer 217, a portion of the deformation layer 217 is prevented from descending into the hole 212 formed in the lower plate 211.

Meanwhile, a vehicle (not shown) according to an embodiment of the present disclosure may include the above-described battery pack 10. The battery pack 10 may be used in various machines or devices using electricity, and for example, may be disposed on an electric vehicle, particularly, an underfloor of an electric vehicle. Here, the electric vehicle may include not only an electric vehicle driven purely by electricity, but also a hybrid vehicle using other energy together with electric energy.

The present disclosure has been described in detail. However, it should be understood that the detailed description and specific examples, while indicating preferred embodiments of the disclosure, are given by way of illustration only.

### INDUSTRIAL APPLICABILITY

The present disclosure relates to a battery pack and a vehicle including the same, and in particular, may be used in industries related to secondary batteries.

## Claims

1. A battery pack (10) comprising:
a battery module (100) comprising a plurality of battery cells;
a case (200) configured to accommodate the battery module (100) therein, and comprising an upper cover (210); and
a fire extinguishing material (300), comprising a fire extinguishing liquid or fire extinguishing powder, and provided in the upper cover (210) of the case (200) to fall when a flame occurs; wherein
the upper cover comprises (210) a lower plate (211) having at least one hole (212) formed therein; a deformation layer (217) positioned on an upper side of the lower plate (211) and deformed by flame; and an upper plate (219) coupled to the lower plate (211) to cover the fire extinguishing material (300), wherein the fire extinguishing material (300) is disposed on the deformation layer (217); wherein
the deformation layer (217) is made of vinyl or plastic, which is a material that melts in a flame in order to allow the fire extinguishing material (300) to fall through the hole (212) of the lower plate (211) when a flame occurs; wherein
fixing portions (218) are formed at both ends of the deformation layer (217), and stoppers (213) in contact with the fixing portions (218) are formed in the lower plate (211); wherein
the fixing portion (218) is formed to protrude upward by having a thickness greater than that of the deformation layer (217); and wherein
the stoppers (213) are formed at both ends of the lower plate (211) and are provided such that at least a portion of the stoppers (213) is caught by the fixing portion (218).

2. The battery pack (10) according to claim 1,
wherein the fire extinguishing material (300) comprises Novec.

3. The battery pack (10) according to claim 1,
wherein the stoppers (213) comprise a first portion (214) extending upwardly from an end of the lower plate (211); a second portion (215) extending vertically from the first portion (214); and a third portion (216) extending vertically from the second portion (215), wherein the third portion (216) is provided to be caught by the fixing portion (218).

4. A vehicle comprising the battery pack (10) according to any one of claims 1 to 3.

## Patentansprüche

1. Batteriepack (10), umfassend:
ein Batteriemodul (100), welches eine Mehrzahl von Batteriezellen umfasst;
ein Gehäuse (200), welches dazu eingerichtet ist, das Batteriemodul (100) darin aufzunehmen, und eine obere Abdeckung (210) umfasst; und
ein Feuerlösch-Material (300), welches eine Feuerlösch-Flüssigkeit oder ein Feuerlösch-Pulver umfasst und in der oberen Abdeckung (210) des Gehäuses (200) bereitgestellt ist, um zu fallen, wenn eine Flamme auftritt; wobei die obere Abdeckung (210) eine untere Platte (211), welche wenigstens ein Loch (212) darin gebildet aufweist; eine Verformungsschicht (217), welche an einer oberen Seite der unteren Platte (211) positioniert ist und von einer Flamme verformt wird; und eine obere Platte (219) umfasst, welche mit der unteren Platte (211) gekoppelt ist, um das Feuerlösch-Material (300) zu bedecken, wobei das Feuerlösch-Material (300) an der Verformungsschicht (217) angeordnet ist; wobei die Verformungsschicht (217) aus Vinyl oder Kunststoff hergestellt ist, welches ein Material ist, welches in einer Flamme schmilzt, um es dem Feuerlösch-Material (300) zu erlauben, durch das Loch (212) der unteren Platte (211) zu fallen, wenn eine Flamme auftritt; wobei
Befestigungsabschnitte (218) an beiden Enden der Verformungsschicht (217) gebildet sind und Stopper (213) in Kontakt mit den Befestigungsabschnitten (218) in der unteren Platte (211) gebildet sind; wobei
der Befestigungsabschnitt (218) dazu gebildet ist, nach oben vorzustehen, indem er eine Dicke aufweist, welche größer als diejenige der Verformungsschicht (217) ist; und wobei
die Stopper (213) an beiden Enden der unteren Platte (211) gebildet sind und derart bereitgestellt sind, dass wenigstens ein Abschnitt der Stopper (213) von dem Befestigungsabschnitt (218) eingefangen ist.

2. Batteriepack (10) nach Anspruch 1,
wobei das Feuerlösch-Material (300) Novec umfasst.

3. Batteriepack (10) nach Anspruch 1,
wobei die Stopper (213) einen ersten Abschnitt (214), welcher sich nach oben von einem Ende der unteren Platte (211) erstreckt; einen zweiten Abschnitt (215), welcher sich vertikal von dem ersten Abschnitt (214) erstreckt; und einen dritten Abschnitt (216) umfassen, welcher sich vertikal von dem zweiten Abschnitt (215) erstreckt, wobei der dritte Abschnitt (216) dazu bereitgestellt ist, von dem Befestigungsabschnitt (218) eingefangen zu sein.

4. Fahrzeug, umfassend den Batteriepack (10) nach einem der Ansprüche 1 bis 3.

## Revendications

1. Bloc-batterie (10) comprenant :
un module de batterie (100) comprenant une pluralité d'éléments de batterie ;
un boîtier (200) configuré pour recevoir le module de batterie (100) dans celui-ci, et comprenant un couvercle supérieur (210) ; et
un matériau d'extinction d'incendie (300), comprenant un liquide d'extinction d'incendie ou une poudre d'extinction d'incendie, et fourni dans le couvercle supérieur (210) du boîtier (200) pour tomber lorsqu'une flamme se produit ; dans lequel
le couvercle supérieur (210) comprend une plaque inférieure (211) ayant au moins un trou (212) formé dans celle-ci ; une couche de déformation (217) positionnée sur un côté supérieur de la plaque inférieure (211) et déformée par une flamme ; et une plaque supérieure (219) accouplée à la plaque inférieure (211) pour recouvrir le matériau d'extinction d'incendie (300), dans lequel le matériau d'extinction d'incendie (300) est disposé sur la couche de déformation (217) ; dans lequel
la couche de déformation (217) est faite de vinyle ou de plastique, qui est un matériau qui fond dans une flamme afin de permettre au matériau d'extinction d'incendie (300) de tomber à travers le trou (212) de la plaque inférieure (211) lorsqu'une flamme se produit ; dans lequel
des parties de fixation (218) sont formées aux deux extrémités de la couche de déformation (217), et des butées (213) en contact avec les parties de fixation (218) sont formées dans la plaque inférieure (211) ; dans lequel
la partie de fixation (218) est formée pour faire saillie vers le haut en ayant une épaisseur plus grande que celle de la couche de déformation (217) ; et dans lequel
les butées (213) sont formées aux deux extrémités de la plaque inférieure (211) et sont fournies de telle sorte qu'au moins une partie des butées (213) soit accrochée par la partie de fixation (218).

2. Bloc-batterie (10) selon la revendication 1,
dans lequel le matériau d'extinction d'incendie (300) comprend du Novec.

3. Bloc-batterie (10) selon la revendication 1,
dans lequel les butées (213) comprennent une première partie (214) s'étendant vers le haut à partir d'une extrémité de la plaque inférieure (211) ; une deuxième partie (215) s'étendant verticalement à partir de la première partie (214) ; et une troisième partie (216) s'étendant verticalement à partir de la deuxième partie (215), dans lequel la troisième partie (216) est fournie pour être accrochée par la partie de fixation (218).

4. Véhicule comprenant le bloc-batterie (10) selon l'une quelconque des revendications 1 à 3.
